# EUROPEAN PATENT APPLICATION

(11) **EP 1 700 628 A2**
(43) Date of publication of application: **13.09.2006**
(21) Application number: 06110756.1
(22) Date of filing: 07.03.2006
(51) Int. Cl.: A63F 13/12

(54) **Systems and methods for providing system level notifications in a multimedia console**

(30) Priority: 08.03.2005 US 79819
(71) Applicant: MICROSOFT CORPORATION, Redmond, Washington 98052 (US)
(72) Inventor: Arthur, Erik John, Redmond, WA 98052 (US); Macauley, James David, Redmond, WA 98052 (US); Malabuyo, Paolo V., Redmond, WA 98052 (US); Glaser, Russell, Redmond, WA 98052 (US); Gunn, Steven Ryan, Redmond, WA 98052 (US)
(74) Representative: Grünecker, Kinkeldey, Stockmair & Schwanhäusser Anwaltssozietät

(57) **Abstract**

A system for providing system level notifications in a multimedia console has a notification system application native to the multimedia console which subscribes to all notification events generated by the application manager of the multimedia console. Through an application programming interface (API), a game developer can easily specify the location ofuser notifications and also delay the display ofuser notifications for the developer's game. A user is notified that a particular notification is intended for him or her in a multi-player environment by a visual indication corresponding to that user's controller. The user may then press a button on the controller to be immediately directed to further information regarding the notification.

## Description

### FIELD OF THE INVENTION

This invention generally relates to the field ofproviding notifications to users of a computing system. In particular, the invention is directed to providing notifications to multiple users of a multimedia console.

### BACKGROUND OF THE INVENTION

Multimedia consoles, such as video game consoles, often have multiple simultaneous users that may receive messages and notifications from a variety of sources. For example, if a video game player (gamer) is playing a computer game on his or her video game console connected to a network in which other gamers may participate in the game being played on the console, notifications may arrive indicating other gamers may wish to join. Traditionally the management of these notifications is handled by the particular game running on the console at the tune. When developing games to support these notifications for multiplayer games, game developers must handle the receipt and display ofthe notifications within the game itself. With the increasing user notifications becoming available in multiplayer environments, this is becoming increasingly cumbersome and time consuming for game developers to address. Also, when multiple gamers are playing on one console, there currently is not a streamline and efficient way to notify the correct gamer for which the notification is intended and then provide an easy and quick way for the particular gamer to respond.

Thus, there is a need for systems and methods that provide a notification for a multimedia console system that efficiently manages incoming notifications and displays them in a meaningful manner for multiple users on the same console, without significant involvement of the particular multimedia application running on the console.

### SUMMARY OF THE INVENTION

The invention is directed to systems and methods for providing system level notifications in a multimedia console. In particular, a method is described for providing system level notifications in a multimedia console having a central processing unit, a graphics processing unit, and a memory. The method comprises the acts ofmanaging the receipt of a notification for a user ofthe multimedia console with a process running as part ofthe multimedia console operating system while a separate multimedia application is running on the multimedia console. Also, the display of a notification is managed for a user ofthe multimedia console with a process running as part ofthe multimedia console operating system while the separate multimedia application is running on the multimedia console. The method may further comprise managing the receipt of notifications for simultaneous multiple users ofthe multimedia console with the process running as part ofthe multimedia console operating system while the multimedia application is running on the multimedia console. Then the display ofnotifications is managed for simultaneous multiple users of the multimedia console with the process running as part ofthe multimedia console operating system while the multimedia application is running on the multimedia console.

Also, a method is described for providing system level notifications in a computing system as well. This method comprises the acts ofmanaging the receipt ofnotifications for simultaneous multiple users ofthe computing system with a process running as part ofthe computing system operating system while the multimedia application is running on the computing system. Also, the display ofnotifications is managed for simultaneous multiple users ofthe computing system with the process running as part ofthe computing system operating system while the multimedia application is running on the computing system.

Additional features ofthe invention will be made apparent from the following detailed description of illustrative embodiments that proceeds with reference to the accompanying drawings.

### BRIEF DESCRIPTION OF THE DRAWINGS

The foregoing summary, as well as the following detailed description ofillustrative embodiments, is better understood when read in conjunction with the appended drawings. For the purpose of illustrating the invention, there is shown in the drawings illustrative embodiments ofthe invention; however, the invention is not limited to the specific methods and instrumentalities disclosed. In the drawings:

Fig. 1 is a block diagram showing an exemplary multimedia console, in which aspects ofthe invention may be implemented;

Fig. 2 is a block diagram showing further details ofthe exemplary multimedia console of Fig. 1, in which aspects ofthe invention may be implemented;

Fig. 3a is a flowchart illustrating a method for providing system level notifications in a multimedia console, in accordance with an aspect ofthe invention;

Fig. 3b is a diagram ofa user controller in accordance with an aspect ofthe invention;

Fig. 4 is a block diagram showing the architecture for a system for providing system level notifications in a multimedia console, in accordance with an aspect ofthe invention;

Fig. 5 is a diagram ofan exemplary notification and associated icon, in accordance with an aspect ofthe invention;

Fig. 6 is a diagram of an exemplary notification and associated icon according to an alternative embodiment of an aspect ofthe invention;

Fig. 7 is a diagram illustrating various exemplary notifications and associated icons according to the type of notification, in accordance with an aspect ofthe invention;

Fig. **8**A is a diagram of a placement ofan exemplary notification according to Fig. 6 on a display screen, in accordance with an aspect ofthe invention;

Fig. 8B is a diagram showing alternative locations for placement of a notification on the display screen of Fig. **8** A, in accordance with an aspect of the invention;

Fig. 9 is a screenshot of an exemplary video game wherein a notification is displayed over the game, in accordance with an aspect ofthe invention;

Fig. **10** is a screenshot of an exemplary video game wherein a notification ofa a different type from that of Fig. **9** is displayed over the game, in accordance with an aspect ofthe invention;

Fig. **11** is a screenshot ofthe exemplary video game of Fig. **10** in which there is a split screen for two players on the same console wherein an exemplary notification is displayed over the game, in accordance with an aspect ofthe invention;

Fig. **12** is a screenshot ofthe exemplary video game ofFig. **10** in which there is a split screen for three players on the same console wherein an exemplary notification is displayed over the game, in accordance with an aspect ofthe invention;

Fig. **13** is a screenshot ofthe exemplary video game of Fig. **10** in which there is a split screen for four players on the same console wherein an exemplary notification is displayed over the game, in accordance with an aspect ofthe invention;

Fig. **14** is a block diagram representing an exemplary computing device suitable for use in conjunction with various aspects ofthe invention; and

Fig. **15** illustrates an exemplary networked computing environment in which many computerized processes, including those ofvarious aspects ofthe invention, may be implemented.

### DETAILED DESCRIPTION OF ILLUSTRATIVE EMBODIMENTS

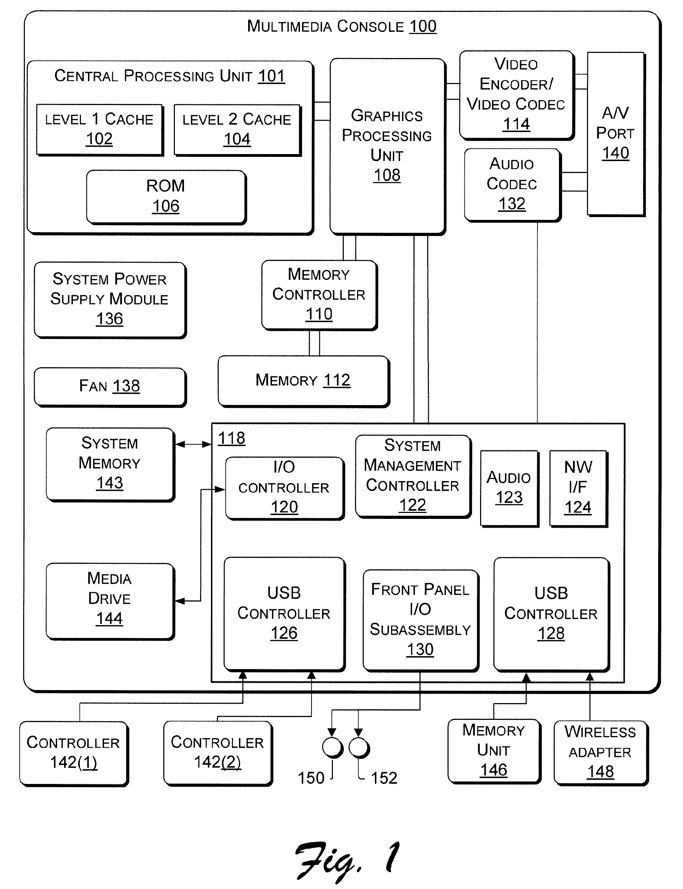

Referring first to Fig. **1,** shown is a block diagram illustrating an exemplary multimedia console, in which aspects ofthe invention may be implemented. Fig. **1** shows the functional components of a multimedia console **100** in which aspects ofthe invention may be implemented. The multimedia console **100** has a central processing unit (CPU) **101** having a level 1 (L1) cache **102,** a level 2 (L2) cache **104,** and a flash ROM (Read-only Memory) **106.** The level 1 cache **102** and level 2 cache **104** temporarily store data and hence reduce the number ofmemory access cycles, thereby improving processing speed and throughput. The flash ROM **106** may store executable code that is loaded during an initial phase of a boot process when the multimedia console **100** is powered. Alternatively, the executable code that is loaded during the initial boot phase may be stored in a FLASH memory device (not shown). Further, ROM **106** may be located separate from CPU **101.**

A graphics processing unit (GPU) **108** and a video encoder/video codec (coder/decoder) **114** form a video processing pipeline for high speed and high resolution graphics processing. Data is carried from the graphics processing unit **108** to the video encoder/video codec 114 via a bus. The video processing pipeline outputs data to an A/V (audio/video) port 140 for transmission to a television or other display. A memory controller 110 is connected to the GPU 108 and CPU 101 to facilitate processor access to various types of memory 112, such as, but not limited to, a RAM (Random Access Memory).

The multimedia console 100 includes an I/O controller 120, a system management controller 122, an audio processing unit 123, a network interface controller 124, a first USB host controller 126, a second USB controller 128 and a front panel I/O subassembly 130 that are preferably implemented on a module 118. The USB controllers 126 and 128 serve as hosts for peripheral controllers 142(1)-142(2), a wireless adapter 148, and an external memory unit 146 (e.g., flash memory, external CD/DVD ROM drive, removable media, etc.). The network interface 124 and/or wireless adapter 148 provide access to a network (e.g., the Internet, home network, etc.) and may be any of a wide variety ofvarious wired or wireless interface components including an Ethernet card, a modem, a Bluetooth module, a cable modem, and the like.

System memory 143 is provided to store application data that is loaded during the boot process. A media drive 144 is provided and may comprise a DVD/CD drive, hard drive, or other removable media drive, etc. The media drive 144 may be internal or external to the multimedia console 100. Application data may be accessed via the media drive 144 for execution, playback, etc. by the multimedia console 100. The media drive 144 is connected to the I/O controller 120 via a bus, such as a Serial ATA bus or other high speed connection (e.g., IEEE 1394).

The system management controller 122 provides a variety of service functions related to assuring availability of the multimedia console 100. The audio processing unit 123 and an audio codec 132 form a corresponding audio processing pipeline with high fidelity and stereo processing. Audio data is carried between the audio processing unit **123** and the audio codec **126** via a communication link. The audio processing pipeline outputs data to the **A/V** port **140** for reproduction by an external audio player or device having audio capabilities.

The front panel I/O subassembly 130 supports the functionality ofthe power button 150 and the eject button 152, as well as any LEDs (light emitting diodes) or other indicators exposed on the outer surface of the multimedia console 100. A system power supply module 136 provides power to the components ofthe multimedia console 100. A fan 138 cools the circuitry within the multimedia console 100.

The CPU 101, GPU 108, memory controller 110, and various other components within the multimedia console 100 are interconnected via one or more buses, including serial and parallel buses, a memory bus, a peripheral bus, and a processor or local bus using any of a variety of bus architectures.

When the multimedia console 100 is powered on or rebooted, application data may be loaded from the system memory **143** into memory **112 and/or** caches **102, 104** and executed on the CPU 101. The application may present a graphical user interface that provides a consistent user experience when navigating to different media types available on the multimedia console 100. In operation, applications and/or other media contained within the media drive 144 may be launched or played from the media drive 144 to provide additional functionalities to the multimedia console 100.

The multimedia console 100 may be operated as a standalone system by simply connecting the system to a television or other display. In this standalone mode, the multimedia console 100 may allow one or more users to interact with the system, watch movies, listen to music, and the like. However, with the integration ofbroadband connectivity made available through the network interface 124 or the wireless adapter 148, the multimedia console 100 may further be operated as a participant in a larger network community.

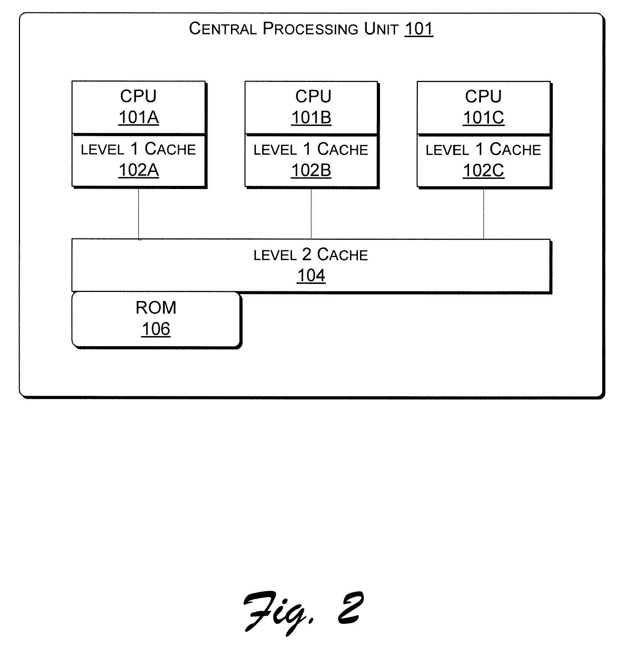

Referring next to Fig. 2, shown are further details of the exemplary multimedia console of Fig. 1. As shown in Fig. 2, CPU 101 comprises three CPUs: CPU 101A, CPU 101B, and CPU 101C. As shown, each CPU has a corresponding L1 cache 102 (e.g., L1 cache 102A, 102B, and 102C, respectively). As shown, each CPU 101A-C is in communication with L2 cache 104. As such, the individual CPUs 101A, B, and C share L2 cache 104. Because L2 cache 104 is shared between multiple CPU's, it may be complex to implement a technique for reserving a portion ofthe L2 cache for system applications. While three CPUs are illustrated, there could be any number of CPUs.

The multimedia console depicted in Figs. 1 and 2 is a typical multimedia console that may be used to execute a multimedia application, such as, for example, a game. Multimedia applications may be enhanced with system features including for example, system settings, voice chat, networked gaming, the capability of interacting with other users over a network, e-mail, a browser application, etc. Such system features enable improved functionality for multimedia console 100, such as, for example, players in different locations can play a common game via the Internet.

Also, over time, system features may be updated or added to a multimedia application. Rather than requiring the multimedia developer to make significant modifications to the multimedia application to provide these system features, the systems and methods described herein allow a multimedia developer to provide system features through separate system applications that work in conjunction with the multimedia application. For example, a system application may embody functionality related to networked capabilities, thereby enabling a multimedia application to be readily adapted to provide networked capabilities with little work by the multimedia (e.g., game) developer. One such capability is that of system level notifications for multiple and networked users. Making system level notifications part ofa system application as opposed to being handled by individual multimedia applications, such as games running on the system, takes handling displaying notifications such as game invitations out ofthe development process for multimedia application developers and allows them to focus on the multimedia application itself.

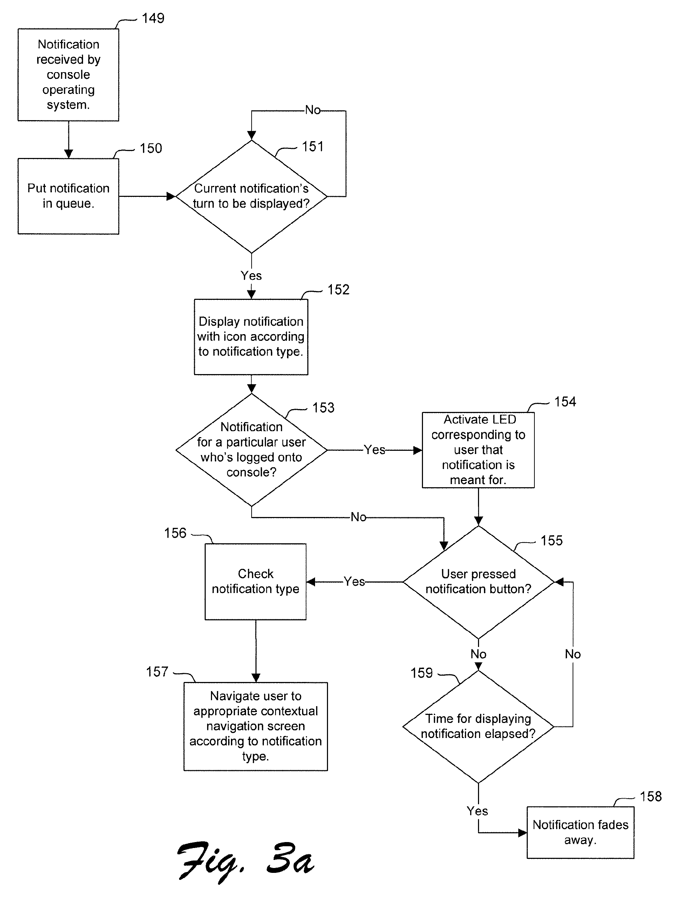

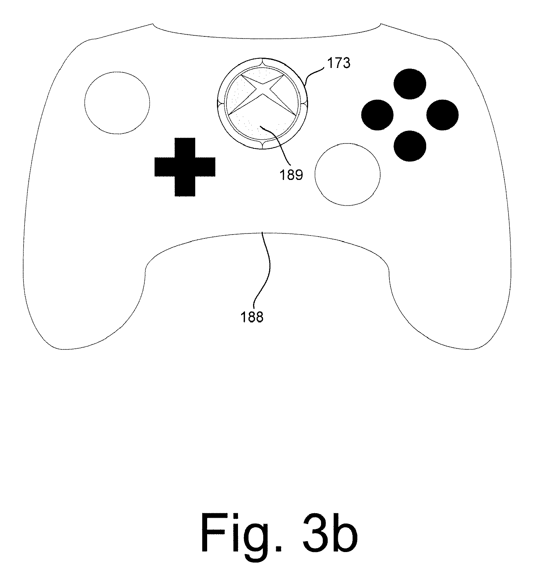

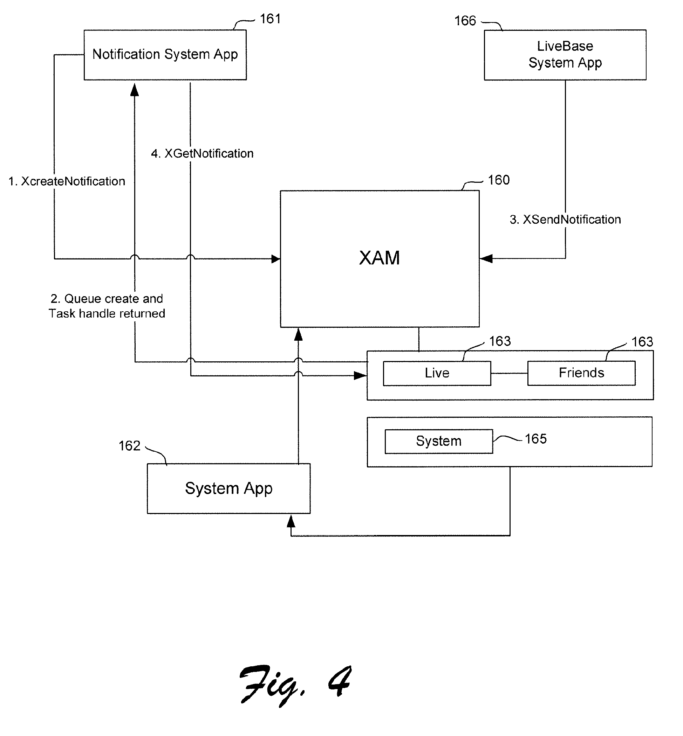

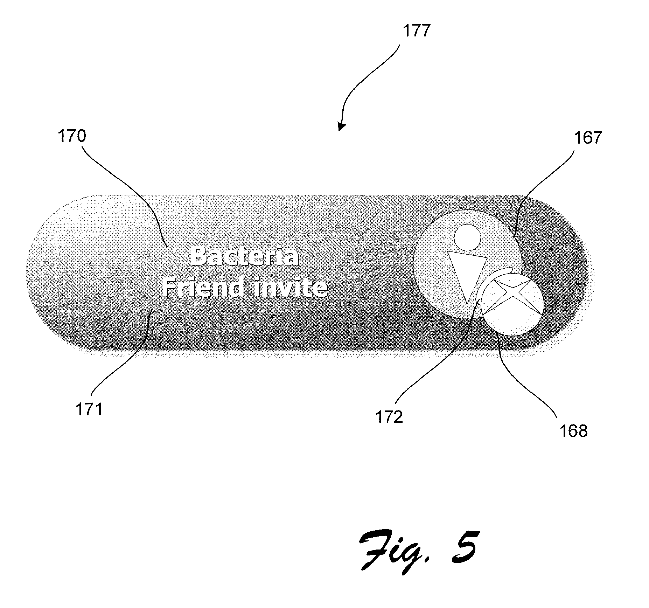

Referring next to Figs. **3** a and **3b,** shown in Fig. **3** a is a flowchart illustrating a method for providing system level notifications in a multimedia console and in Fig. **3b,** shown is a diagram of a user controller **188** in accordance with an aspect ofthe invention. Once a notification is received **149** by the console operating system, whether it be a notification that occurs in response to something from another user (such as another video game player, i.e., gamer) or notifications from the multimedia console system itself, the notification is put in a notification queue **150.** The queue is used in case a user or multiple users on the same multimedia console receive more than 1 notification at a time or receive a notification while an existing notification is being displayed. The queue is also used because displaying an individual notification takes time and multiple notifications can arrive at once or while a notification is being displayed on the screen. The additional notifications will be queued and displayed following the current notification (in the order received). Also, if more than a certain number ofnotifications, say 6, for example, are queued, the user will receive a notification that multiple notifications are pending, perhaps with the number of notifications pending displayed along with an icon showing a picture of a message.

Ifit is the current notification's turn in the queue to be displayed **151,** a notification will be displayed on the multimedia console display screen with an icon according to the type of notification. If the current notification is the only one in the queue, it will be displayed immediately. Ifnot, then the notification will wait in the queue until it is the notification's turn to be displayed. If the notification is for a particular user who is logged on or signed on to the multimedia console 153 identified by his or her user name (e.g., a **gamertag**), then a visual indication, such as an illuminated light emitting diode (LED) 173, for example will be activated. In particular, the LED 173 that is associated with that particular user for which the notification was intended will be illuminated **154.**

The visual indication may appear **154** on the multimedia console display screen (as a rendering ofthe illuminated corresponding LED, for example), on the multimedia console controller **188** of that particular user for which the notification was intended, on the multimedia console box itself, or on any combination of these locations. In the case of an LED visual indication **173,** it may also blink to provide further perceptibility by the user. Then, once the notification is displayed **152,** if the user presses a notification button **189,** the type of notification is checked **156,** and the user is navigated **157** to the appropriate contextual navigation screen according to the type ofnotification being displayed when the notification button **189** was pressed. The notification button **189** may be a button **189** conveniently located on the user's controller **188,** a button icon on the display screen activated via the controller or other input means, on the multimedia console box itself, or any combination thereof. If the user does not press the notification button **189,** then the notification disappears **158** after a predetermined amount oftime **159,** say 3 seconds, for example. Thus, multiple users on the same multimedia console will be able to receive notifications at any time from within any application running on the multimedia console.

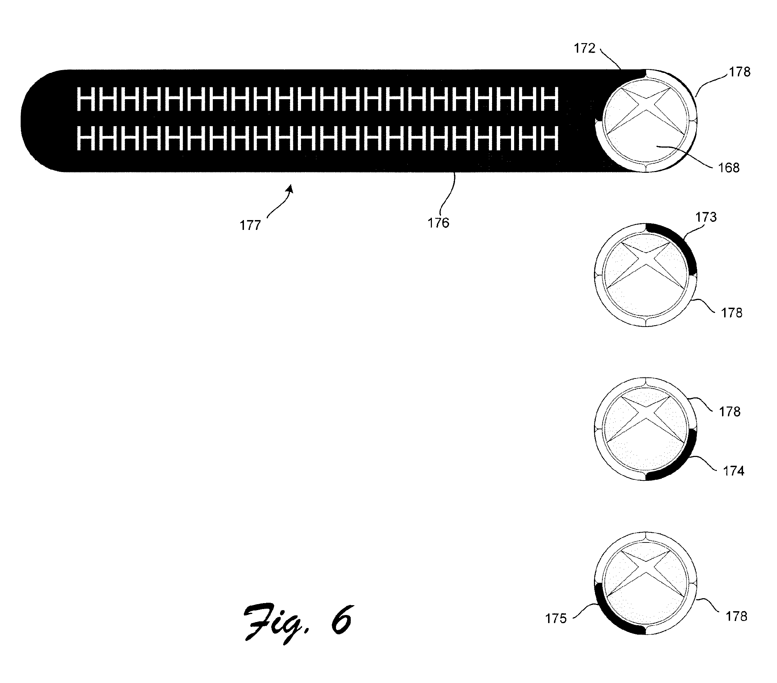

Referring next to Fig. **4,** shown is a block diagram illustrating the architecture of a system for providing system level notifications in a multimedia console, in accordance with an aspect ofthe invention. Shown is the application manager **(XAM) 160,** the notifications system application (Notification System App) **161,** and other exemplary system applications (System App) **162,** and (LiveBase System App) **166.** Also shown are example notification areas called live **163,** friends **164** and system **165.** Notification areas are a grouping mechanism. Each area refers to a group of a certain type of notification. For example, live **163** refers to notifications having to do with users interaction with other remote users or players participating in the same multimedia application such as a game over a computer network such as the Internet. The friends area **164** refers to those notifications having to do with the system whereby users can give other users a special status offriend, and system refers to notifications having to do with the operation ofthe multimedia console system itself. There may also be a voice area for those notifications having to do with voice features over a network.

A multimedia application can subscribe to any of these areas, all notifications, or no notifications. The notification system app is notified by other system apps when the other system app wants to display a notification on the screen to a user. Examples of notifications that may fall within various different areas are listed below. This list is for exemplary purposes only as there may be different numbers and different types of notifications as is suitable for the particular user environment.

### Live Area

- Signed-in to Live
- Message received
- Unable to sign-in to Live
- Required Message
- New Terms of Use
- Gamertag change required
- Membership expired
- Banned from Live
- Game invitation received
- Player joined game session
- Player left game session

### Voice area

- Voice banned
- Player joined chat session

### Friend Area

- Friend has come online
- Friend request received

### System area

- USB device detected
- Low-battery warning
- Low-wireless signal strength
- Battery has died
- Battery charging
- Battery charged
- Wireless controller found and assigned to virtual port
- Controller disconnected or signal strength lost
- Snapshot taken
- Unable to take snapshot, no space
- Game timer has expired (about to expire)

The system application **161** send notifications to the queue with XQueuePopupNotification

Other apps such as LiveBase System App **166,** for example, can create a pop-up notification using the XQueuePopupNotification function. **XQueueNotification** takes the icon to display, the text for the notification and the area to navigate to on a button **press..** For example, a friend coming online would be a notification in the live **163** area with the type friend online.

Referring next to Fig. **5,** shown is a diagram of an exemplary notification **177** and associated icon **167,** in accordance with an aspect ofthe invention. A notification **177** generally comprises a few specific elements such as a notification specific icon **167** (e.g., a game invite, voice chat invite, friend request, messages, battery low, error, etc.), a notification button icon **168** having a visual indication **172** that is associated with the particular user on the multimedia console for which the notification was intended, the user name 170 (e.g., the **gamertag)** or name ofthe sender (e.g. Bacteria, Funkatrontastic, Doc, Thrasher, EA Games®, Microsoft®, Xbox Live®, System, etc.), and a briefnotification descriptor **171** (e.g. Friend Request, Message, etc.).

While a user is accessing other features ofthe multimedia console, such as a multimedia console guide, for example, notifications will continue to be displayed for the user. As discussed above, a notification will start fading away after 3 seconds ofbeing displayed and will take approximately 500 milliseconds to finish fading. These time lengths, however, for the duration ofthe notification display may be longer or shorter and may be set by the user as desirable. After the notification fades, the user will be able to navigate through the multimedia console guide to a message center to view the notification.

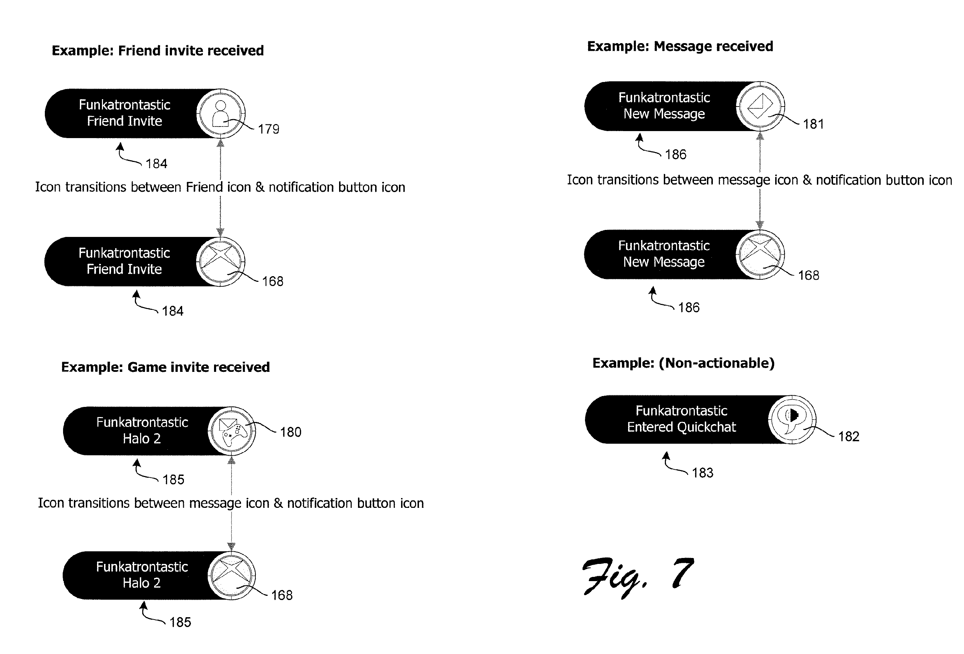

Referring next to Fig. **6** shown is a diagram of an exemplary notification **177** and associated icon **168** according to an alternative embodiment of an aspect ofthe invention. When a notification **177** appears, it has a notification button icon **168** with a visual indication **169** that is associated with the particular user on the multimedia console for which the notification was intended, as opposed to displaying both the notification button icon **168** and the notification specific icon **167** of Fig. 6 at the same time. As will be discussed with reference to Fig. **7,** the notification **177** may have an icon that is static, or transitions between the notification button icon 168 and the notification specific icon **167** as appropriate.

The visual indication **172** as shown in Fig. **6** may be a rendering of an illuminated LED **172** within a plurality ofLEDs **173, 174, 175** formed in a ring (i.e., a "ring oflight") **178.** Each LED rendering **172, 173, 174, 175** within the ring of light **178** corresponds to a particular virtual port on the multimedia console to which a particular user is assigned. For example, when a notification arrives for the user on virtual port **1,** the rendering of the LED **172** associated with virtual port 1 within the ring oflight **178** is illuminated and/or blinks. This is to notify the multiple users on the multimedia console which user the notification is for. As each user knows which virtual port he or she is on, they can respond accordingly when the LED within the plurality of LEDs **173, 174, 175** corresponding to their particular virtual port is illuminated. When a notification arrives for the user on virtual port 2, the rendering ofthe LED **173** associated with virtual port 2 within the ring of light **178** is illuminated and/or blinks. When a notification arrives for the user on virtual port 3, the rendering ofthe LED **174** associated with virtual port 3 within the ring of light is illuminated and/or blinks. Finally, when a notification arrives for the user on virtual port 4, the rendering ofthe LED **175** associated with virtual port 4 within the ring oflight **178** is illuminated and/or blinks. There may alternatively be more than four virtual ports and thus more LEDs within the ring oflight corresponding to each virtual port. Also, the color ofthe LEDs **173, 174, 175** may differ according to the type of message received. For example, if the received notification is a live notification, the appropriate LED will blink orange and ifit is a system notification, the LED will blink green.

LEDs **172, 173, 174, 175** forming the ring of light **178** may also be on the multimedia console itself and the users' controllers. The LED within the ring oflight **178** on the multimedia console corresponding to the virtual port to which the notification's recipient is assigned will illuminate and/or blink when the notification arrives for that user. All the LEDs within the ring of light **178** on the notification recipient's controller (i.e., the controller corresponding to the virtual port to which the notification's recipient is assigned) will illuminate and/or blink when a notification arrives for that user. Alternatively, only the LED within the ring of light **178** on the controller corresponding to the virtual port to which the notification's recipient is assigned will illuminate and/or blink.

The notification has a black background, for example, and has 2 lines oftext **176,** each with a maximum width of 22 characters. However, the number oflines and characters **176** may be larger or smaller as appropriate. Also, the notification **177** dynamically resizes to the width of the content of the notification.

Referring next to Fig. **7,** shown is a diagram illustrating various exemplary notifications **183, 184, 185, 186** and associated icons according to the type ofnotification, in accordance with an aspect ofthe invention. As shown in Fig. **7,** the notifications **184, 185, 186** to which a user may respond in some fashion appear with an icon that transitions between the notification button icon 168 and the various notification specific icons that indicate pictorially what type ofnotification it is.

As an example, shown is a friend invite icon **179,** a game invite icon **180,** a message received icon **181,** and an entered quickchat icon **182.** When the friend invite notification **184** appears, the notification's icon transitions between the friend invite icon **179** and the notification button icon **168.** When the game invite notification **185** appears, the notification's icon transitions between the game invite icon **180** and the notification button icon **168.** When the message received notification **186** appears, the notification's icon transitions between the message received icon **181** and the notification button icon **168.** There may optionally be fewer types ofmessages and associated icons or additional types ofmessages with different types of associated icons for each type of message.

For notifications to which the user need not or cannot respond, the icon may remain static, displaying only the notification specific icon. For example, if notification arrives indicating that another user has entered a chat session **183,** this type ofnotification is categorized as non-actionable since there is no response available, and the notification would have a static icon **182** corresponding to that type ofnon-actionable notification. Below is a list of examples ofnotification types and to where the user will be navigated after pressing the notification button **189** while the notification is present on the display screen.

| | |
|---|---|
| Notification Type | Navigation Destination on User Pressing Notification Button 189 |
| Signed-in to Live | Multimedia console guide home page (or profile page) |
| Unable to sign-in to Live | Error message with option to troubleshoot |
| Friend has come online | Contextual gamer options menu for specific friend |
| Game invitation received | Game invitation message view in message center within multimedia console guide |
| Message received | Message view in message center |
| Queued Notifications (>7 notifications) | Message center within multimedia console guide |
| Friend request received | Contextual gamer options menu for sender |
| Player joined chat session | Chat lobby |
| Player left chat session | Chat lobby or gamer options menu for player |
| USB device detected | Contextual based on device (media, memory, settings) |
| Low-battery warning | Controller management area within system multimedia console guide |
| Low-wireless signal strength | Controller management area within system multimedia console guide |
| Battery has died | No notification button 189 action, this is a modal error message |
| Battery charging | Controller management area within system multimedia console guide or no action |
| Battery charged | Controller management area within system multimedia console guide or no action |
| Wireless controller found and assigned to virtual port | Ifvalid notification, controller management area within multimedia console guide |
| Controller disconnect or signal strength (error message) | Error message |
| Snapshot taken | Snapshot area |
| Unable to take snapshot (no space) | Error message with option to clean-up memory |
| Game timer has expired | Game timer user interface |

Generally, each notification **177** will display the minimum amount ofinformation necessary to give the user enough information to decide whether to interact with the notification **177.** Notifications **177** may have a particular stylistic look (i.e., theme) based on a user selected theme (i.e., skin) within a multimedia console guide and, for example, are not determined by the multimedia applications or games themselves running on the console. The notification **177** is accompanied by a respective notification audio cue when it first arrives and as discussed above, may be displayed on the screen for a total of3 seconds at which point it fades away over the course of an additional 500 milliseconds, for example. The duration for the notification 177 display **fading** sequence may also be changeable by the user. There may be 2 seconds between multiple notifications, for example, and only a single notification will be displayed at any one time to prevent the display screen from being obscured by multiple notifications.

There is a public application programming interface (API) for developers of multimedia applications for the multimedia console to use that delays the display of a notification. This delay may be for up to 1 minute, for example. Once the delay interval has elapsed the notification system application **161** will display any deferred notifications one at a time. Multimedia applications running on the console will not be able to call this API multiple times in a row so that there will be an opportunity for the system application **162** to display notifications to users.

Because the very nature of notifications is somewhat intrusive (i.e., communicating something to the user while the user is doing another action), the user has the ability to quickly and easily turn offnotifications. At any time a user may press the notification button **189** to access the multimedia guide and navigate to a menu which gives the user the ability to change his or her online/notifications status to "Busy". Once this state is set, a user will not receive system type or live type notifications and messages while running a multimedia application on the console, such as while playing a game. This setting, however is reset the next time the console is booted or a user signs in. In this manner, a user can't accidentally permanently disable notifications. However, while a user is accessing the multimedia console guide, notifications will continue to be displayed for the user.

Notification settings in a user's profile are broken down in such a way that a user is able to specify specific kinds of notifications **177** that he or she wishes to receive while running a multimedia application on the console, such as while playing a game. For example, a user may select to receive game invites and friend beat my score notifications only, etc. These settings are part of a user's digital identity and roam with the user.

If a user is in the multimedia console guide user interface and a notification **177** has been received, the user for which the notification is intended may then press the notification button 189 on their controller to navigate to the notification. The user may then press a back button on his or her controller **188** to return to previous location within the multimedia console guide user interface. This also occurs even if the user for which the message is intended is not the same user who entered the multimedia console guide user interface.

Referring next to Fig. **8 A,** shown is a diagram of a placement ofan exemplary notification **177** according to Fig. 6 on a display screen, in accordance with an aspect of the invention. Notifications **177** are displayed in default locations specified by the multimedia application running on the multimedia console (e.g., a video game). This is done through an application programming interface that provides notification placement hinting. One default location that may be specified the notification is displayed in the center ofthe screen as shown in Fig. **8A.**

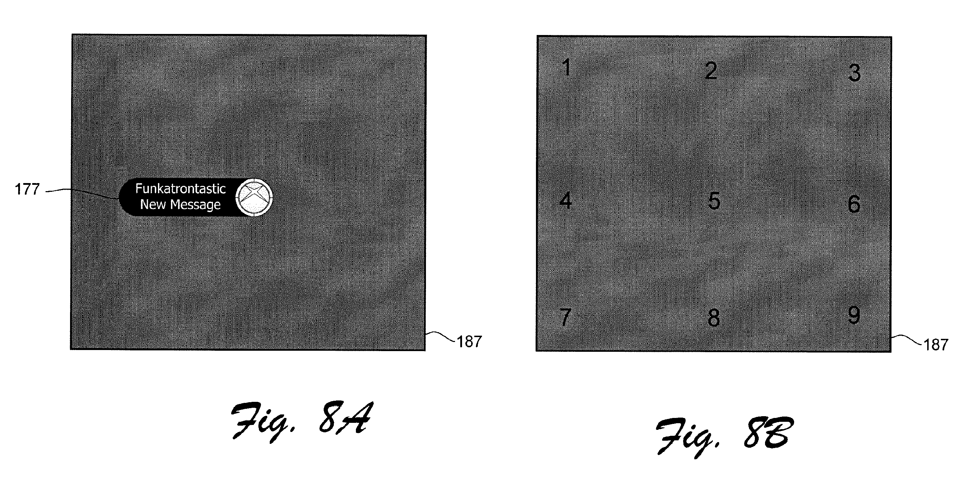

Referring next to Fig. **8B,** shown is a diagram illustrating alternative default locations for placement of notification **177** on the display screen of Fig. **8 A,** in accordance with an aspect of the invention. These locations are numbered 1 through 9. Developers ofapplications for the multimedia console, such as game title developers, are able to indicate to the **XAM 160** where notifications should be displayed. For example, through notification placement hinting, a multimedia application running on the console can have system and live notifications appear in one corner or on one side of the screen. To prevent the undesirable user experience ofhaving the same notification (game invite to multiple users on the same console) getting chained together, ifmultiple users on the same console are receiving the same notification, only one notification will be displayed in one location for all the users receiving the same notification.

The 9 default locations show positions in the center, edge and corners of the display screen **187.** Recommended placement for different multiple user scenarios are provided below, however, other combinations may be used as well.

### Recommended placement

- Single user: Bottom edge
- Quad screen multi-user: Center
- Full screen multi-user: Bottom edge
- Split screen 2 user: closest edge to bottom-right corner that is perpendicular to split
- Split screen 3 user: closest edge to bottom-right corner that is perpendicular

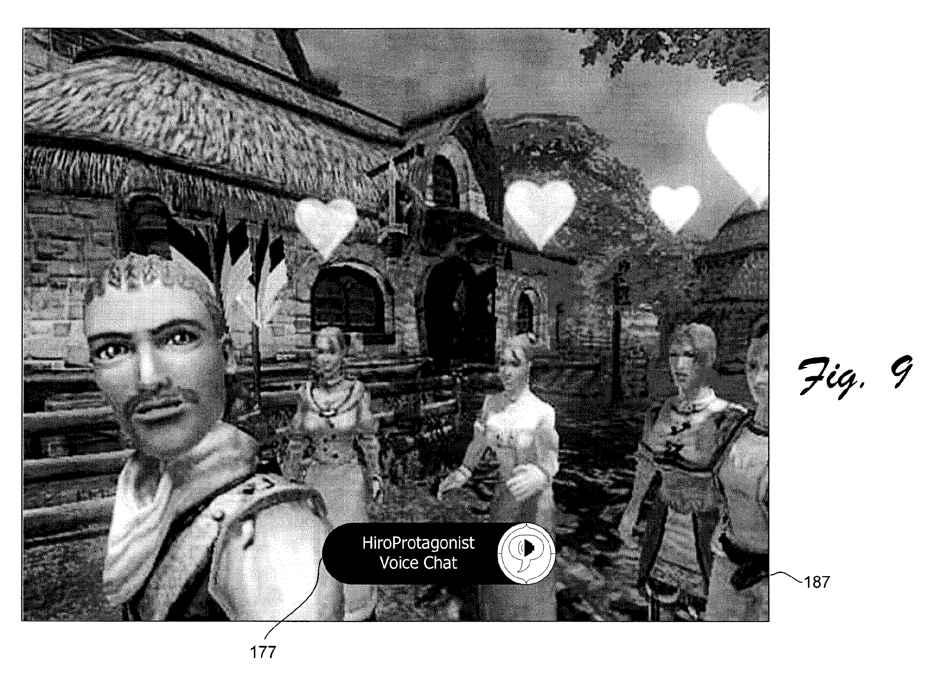

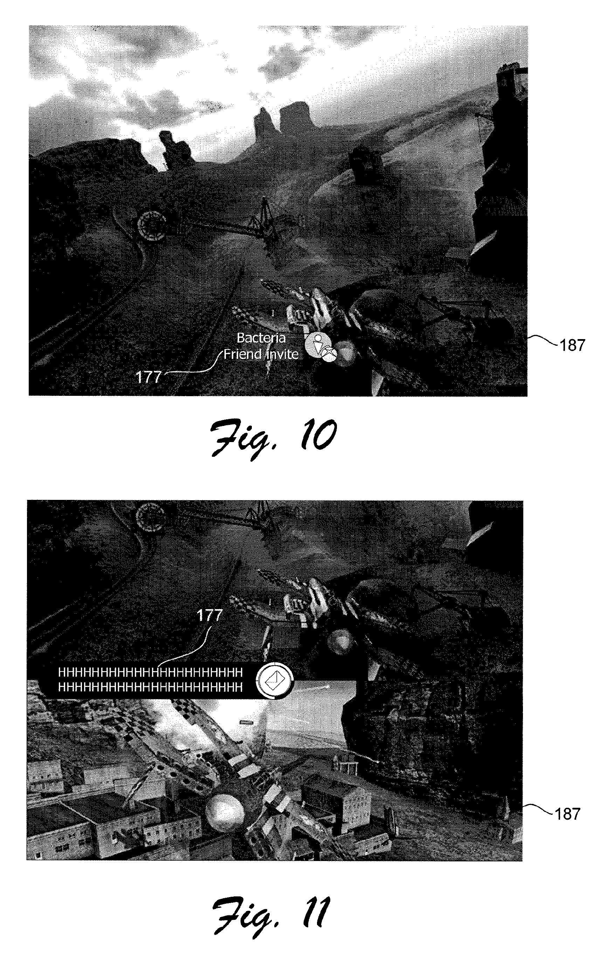

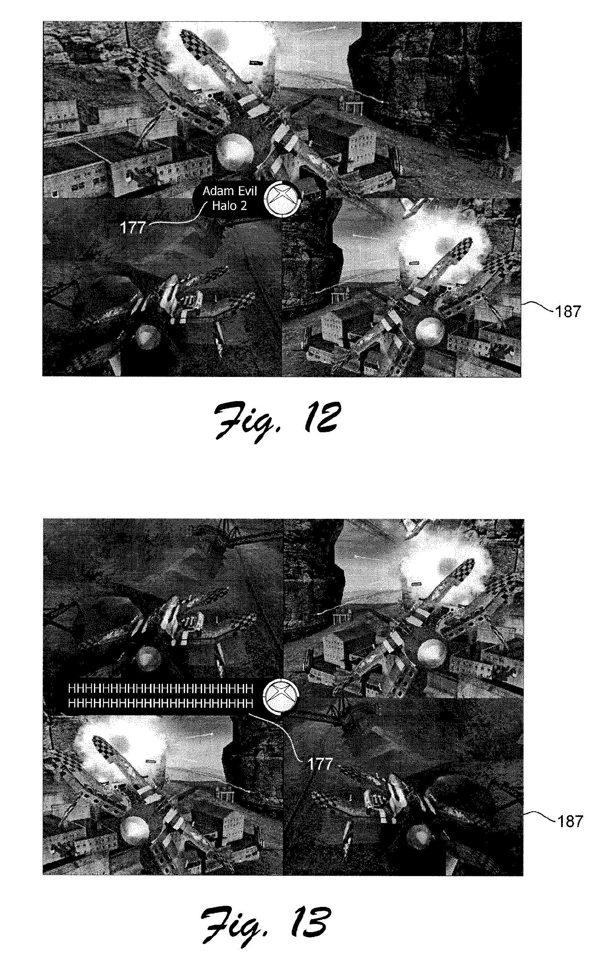

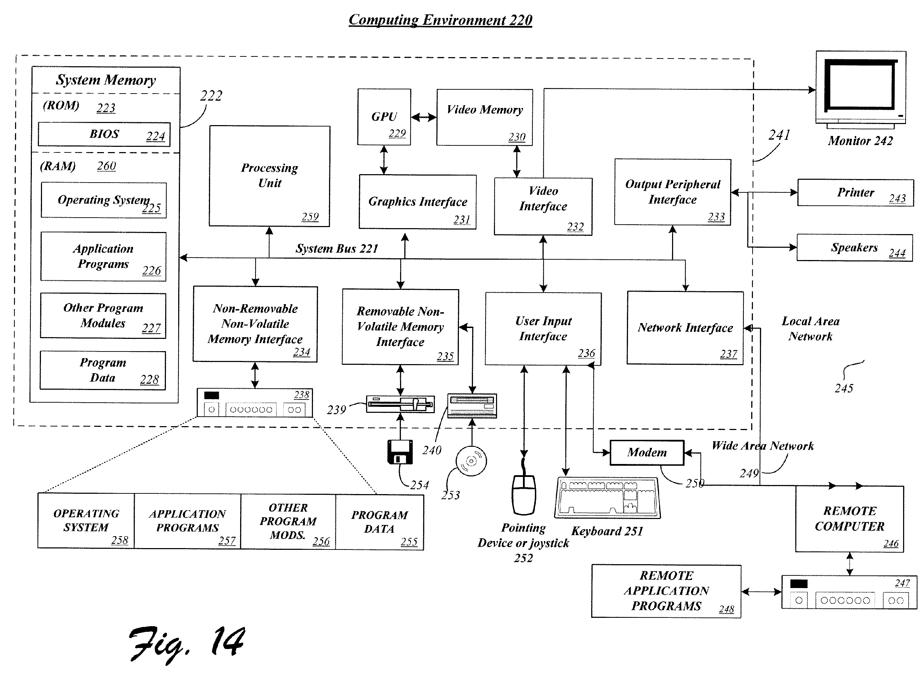

Referring next to Figs. **9** through **13,** shown are screenshots of exemplary video games wherein a notification **177** is displayed over the game shown in a display screen **187,** in accordance with an aspect ofthe invention. As shown, the notification **177** is rendered on top, and may have different default locations based on whether the are multiple players using a split screen. Fig. **10** is a screenshot of an exemplary video game wherein a notification **177** of a different type from that of Fig. **9** is displayed over the game. Fig. **11** is a screenshot of the exemplary video game of Fig. **10** in which there is a split screen for two players. Notice that the location ofthe notification **177** is different for a single player in Fig. **10** than for two players using a split screen as in Fig. **11.** Fig. **12** is a screenshot ofthe exemplary video game of Fig. **10** in which there is a split screen for three players on the same console wherein an exemplary notification is displayed over the game and Fig. **13** is a screenshot of the exemplary video game of Fig. **10** in which there is a split screen for four players on the same console with an exemplary notification is displayed over the game.

### Exemplary Computing and Network Environment

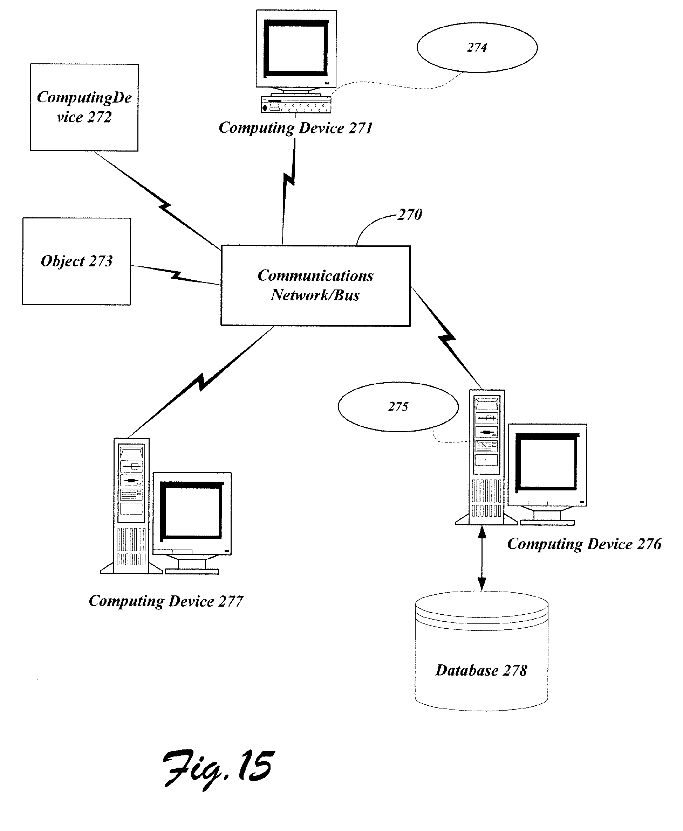

Although the system level notification system has been described thus far as it is applicable to a multimedia console, the notification system may run and also be used on other computing systems such as the exemplary computing and network environment described below. Referring to Fig. 14, shown is a block diagram representing an exemplary computing device suitable for use in conjunction with various aspects ofthe invention. For example, the computer executable instructions that carry out the processes and methods for providing the system level notifications as described above may reside **and/or** be executed in such a computing environment as shown in Fig. 14. The computing system environment 220 is only one example of a suitable computing environment and is not intended to suggest any limitation as to the scope ofuse or functionality of the invention. Neither should the computing environment 220 be interpreted as having any dependency or requirement relating to any one or combination of components illustrated in the exemplary operating environment 220.

Aspects ofthe invention are operational with numerous other general purpose or special purpose computing system environments or configurations. Examples ofwell known computing systems, environments, and/or configurations that may be suitable for use with the invention include, but are not limited to, personal computers, server computers, hand-held or laptop devices, multiprocessor systems, microprocessor-based systems, set top boxes, programmable consumer electronics, network PCs, minicomputers, mainframe computers, distributed computing environments that include any ofthe above systems or devices, and the like.

Aspects ofthe invention may be implemented in the general context of computer-executable instructions, such as program modules, being executed by a computer. Generally, program modules include routines, programs, objects, components, data structures, etc. that perform particular tasks or implement particular abstract data types. Aspects ofthe invention may also be practiced in distributed computing environments where tasks are performed by remote processing devices that are linked through a communications network. In a distributed computing environment, program modules may be located in both local and remote computer storage media including memory storage devices.

An exemplary system for implementing aspects ofthe invention includes a general purpose computing device in the form of a computer **241**. Components of computer 241 may include, but are not limited to, a processing unit 259, a system memory 222, and a system bus 221 that couples various system components including the system memory to the processing unit 259. The system bus 221 may be any of several types ofbus structures including a memory bus or memory controller, a peripheral bus, and a local bus using any of a variety ofbus architectures. By way of example, and not limitation, such architectures include Industry Standard Architecture (ISA) bus, Micro Channel Architecture (MCA) bus, Enhanced ISA (EISA) bus, Video **Electronics** Standards Association (VESA) local bus, and Peripheral Component Interconnect (PCI) bus also known as Mezzanine bus.

Computer 241 typically includes a variety of computer readable media. Computer readable media can be any available media that can be accessed by computer 241 and includes both volatile and nonvolatile media, removable and non-removable media. By way ofexample, and not limitation, computer readable media may comprise computer storage media and communication media. Computer storage media includes both volatile and nonvolatile, removable and non-removable media implemented in any method or technology for storage of information such as computer readable instructions, data structures, program modules or other data. Computer storage media includes, but is not limited to, RAM, ROM, EEPROM, flash memory or other memory technology, CD-ROM, digital versatile disks (DVD) or other optical disk storage, magnetic cassettes, magnetic tape, magnetic disk storage or other magnetic storage devices, or any other medium which can be used to store the desired information and which can accessed by computer **241.** Communication media typically embodies computer readable instructions, data structures, program modules or other data in a modulated data signal such as a carrier wave or other transport mechanism and includes any information delivery media. The term "modulated data signal" means a signal that has one or more of its characteristics set or changed in such a manner as to encode information in the signal. By way of example, and not limitation, communication media includes wired media such as a wired network or **direct-wired** connection, and wireless media such as acoustic, **RF,** infrared and other wireless media. Combinations ofthe any ofthe above should also be included within the scope of computer readable media.

The system memory 222 includes computer storage media in the form of volatile **and/or** nonvolatile memory such as read only memory (ROM) 223 and random access memory (RAM) 260. A basic **input/output** system 224 (BIOS), containing the basic routines that help to transfer information between elements within computer **241**, such as during start-up, is typically stored in ROM 223. RAM 260 typically contains data **and/or** program modules that are immediately accessible to **and/or** presently being operated on by processing unit 259. By way of example, and not limitation, Fig. 14 illustrates operating system 225, application programs 226, other program modules 227, and program data 228.

The computer **241** may also include other **removable/non-removable,** volatile/nonvolatile computer storage media. By way of example only, Fig. 14 illustrates a hard disk drive 238 that reads from or writes to non-removable, nonvolatile magnetic media, a magnetic disk drive 239 that reads from or writes to a removable, nonvolatile magnetic disk 254, and an optical disk drive 240 that reads from or writes to a removable, nonvolatile optical disk 253 such as a CD ROM or other optical media. Other removable/non-removable, volatile/nonvolatile computer storage media that can be used in the exemplary operating environment include, but are not limited to, magnetic tape cassettes, flash memory cards, digital versatile disks, digital video tape, solid state RAM, solid state ROM, and the like. The hard disk drive 238 is typically connected to the system bus 221 through an non-removable memory interface such as interface 234, and magnetic disk drive 239 and optical disk drive 240 are typically connected to the system bus 221 by a removable memory interface, such as interface 235.

The drives and their associated computer storage media discussed above and illustrated in Fig. 14, provide storage of computer readable instructions, data structures, program modules and other data for the computer **241.** In Fig. **14,** for example, hard disk drive 238 is illustrated as storing operating system 258, application programs 257, other program modules 256, and program data **255.** Note that these components can either be the same as or different from operating system 225, application programs 226, other program modules 227, and program data 228. Operating system 258, application programs 257, other program modules 256, and program data 255 are given different numbers here to illustrate that, at a minimum, they are different copies. A user may enter commands and information into the computer **241** through input devices such as a keyboard 251 and pointing device 252, commonly referred to as a mouse, trackball or touch pad. Other input devices (not shown) may include a microphone, joystick, game pad, satellite dish, scanner, or the like. These and other input devices are often connected to the processing unit 259 through a user input interface 236 that is coupled to the system bus, but may be connected by other interface and bus structures, such as a parallel port, game port or a universal serial bus (USB). A monitor 242 or other type of display device is also connected to the system bus 221 via an interface, such as a video interface 232. In addition to the monitor, computers may also include other peripheral output devices such as speakers 244 and printer 243, which may be connected through a output peripheral interface 233.

The computer **241** may operate in a networked environment using logical connections to one or more remote computers, such as a remote computer 246. The remote computer 246 may be a personal computer, a server, a router, a network PC, a peer device or other common network node, and typically includes many or all of the elements described above relative to the computer 241, although only a memory storage device 247 has been illustrated in Fig. 14. The logical connections depicted in Fig. 14 include a local area network (LAN) 245 and a wide area network (WAN) 249, but may also include other networks. Such networking environments are commonplace in offices, enterprise-wide computer networks, intranets and the Internet.

When used in a LAN networking environment, the computer **241** is connected to the LAN 245 through a network interface or adapter 237. When used in a WAN networking environment, the computer 241 typically includes a modem 250 or other means for establishing communications over the WAN 249, such as the Internet. The modem 250, which may be internal or external, may be connected to the system bus 221 via the user input interface 236, or other appropriate mechanism. In a networked environment, program modules depicted relative to the computer 241, or portions thereof, may be stored in the remote memory storage device. By way of example, and not limitation, Fig. 14 illustrates remote application programs 248 as residing on memory device 247. It will be appreciated that the network connections shown are exemplary and other means of establishing a communications link between the computers may be used.

It should be understood that the various techniques described herein may be implemented in connection with hardware or software or, where **appropriate,** with a combination of both. Thus, the methods and apparatus ofthe invention, or certain aspects or portions thereof, may take the form ofprogram code (i.e., instructions) embodied in tangible media, such as floppy diskettes, CD-ROMs, hard drives, or any other machine-readable storage medium wherein, when the program code is loaded into and executed by a machine, such as a computer, the machine becomes an apparatus for practicing the invention. In the case ofprogram code execution on programmable computers, the computing device generally includes a processor, a storage medium readable by the processor (including volatile and **non-volatile** memory **and/or** storage elements), at least one input device, and at least one output device. One or more programs that may implement or utilize the processes described in connection with the invention, e.g., through the use of an API, reusable controls, or the like. Such programs are preferably implemented in a high level procedural or object oriented programming language to communicate with a computer system. However, the **program(s)** can be implemented in assembly or machine language, if desired. In any case, the language may be a compiled or interpreted language, and combined with hardware implementations.

Although exemplary embodiments refer to utilizing aspects of the invention in the context of one or more stand-alone computer systems, the invention is not so limited, but rather may be implemented in connection with any computing environment, such as a network or distributed computing environment. Still further, aspects of the invention may be implemented in or across a plurality ofprocessing chips or devices, and storage may similarly be effected across a plurality of devices. Such devices might include **personal** computers, network servers, handheld devices, supercomputers, or computers integrated into other systems such as automobiles and airplanes.

An exemplary networked computing environment is provided in Fig. **15.** One of ordinary skill in the art can appreciate that networks can connect any computer or other client or server device, or in a distributed computing environment. In this regard, any computer system or environment having any number ofprocessing, memory, or storage units, and any number of applications and processes occurring simultaneously is considered suitable for use in connection with the systems and methods provided.

Distributed computing provides sharing of computer resources and services by exchange between computing devices and systems. These resources and services include the exchange of information, cache storage and disk storage for files. Distributed computing takes advantage ofnetwork connectivity, allowing clients to leverage their collective power to benefit the entire enterprise. In this regard, a variety of devices may have applications, objects or resources that may implicate the processes described herein.

Fig. **15** provides a schematic diagram of an exemplary networked or distributed computing environment. The environment comprises computing devices 271, 272, 276, and 277 (including multimedia console 1 280 and multimedia console 2 **281** according to the present invention) as well as objects **273, 274,** and **275,** and database 278. Each of these entities **271, 272, 273, 274, 275, 276, 277, 278, 280** and **281** may comprise or make use ofprograms, methods, data stores, programmable logic, etc. The entities **271, 272, 273, 274, 275, 276, 277, 278, 280** and 281 may span portions ofthe same or different devices such as PDAs, audio/video devices, **MP3** players, personal computers, etc. Each entity 271, 272, 273, 274, 275, 276, 277, 278, 280 and 281 can communicate with another entity 271, 272, 273, 274, 275, 276, 277, 278, 280 and **281** by way ofthe communications network 270. In this regard, any entity may be responsible for the maintenance and updating of a database 278 or other storage element.

This network 270 may itself comprise other computing entities that provide services to the system of Fig. 15, and may itselfrepresent multiple interconnected networks. In accordance with an aspect of the invention, each entity **271, 272, 273, 274,275,276,277, 278, 280** and 281 may contain discrete functional program modules that might make use of an API, or other object, **software,** firmware **and/or** hardware, to request services of one or more of the other entities **271, 272, 273, 274, 275, 276, 277, 278, 280** and **281.**

It can also be appreciated that an object, such as 275 , may be hosted on another computing device 276. Thus, although the physical environment depicted may show the connected devices as computers, such illustration is merely exemplary and the physical environment may alternatively be depicted or described comprising various digital devices such as PDAs, televisions, MP3 players, etc., software objects such as interfaces, COM objects and the like.

There are a variety of systems, components, and network configurations that support distributed computing environments. For example, computing systems may be connected together by wired or wireless systems, by local networks or widely distributed networks. Currently, many networks are coupled to the Internet, which provides an infrastructure for widely distributed computing and encompasses many different networks. Any such infrastructures, whether coupled to the Internet or not, may be used in conjunction with the systems and methods provided.

A network infrastructure may enable a host ofnetwork topologies such as **client/server,** peer-to-peer, or hybrid **architectures.** The "client" is a member of a class or group that uses the services of another class or group to which it is not related. In computing, a client is a process, i.e., roughly a set of instructions or tasks, that requests a service provided by another program. The client process utilizes the requested service without having to "know" any **working** details about the other program or the service itself. In a **client/server** architecture, particularly a networked system, a client is usually a computer that accesses shared network resources provided by another computer, e.g., a **server.** In the example of Fig. 15, any entity 271, 272, 273, 274, 275, 276, 277, 278, 280 and **281** can be considered a client, a server, or both, depending on the circumstances.

A server is typically, though not necessarily, a remote computer system accessible over a remote or local network, such as the Internet. The client process may be **active** in a first computer system, and the server process may be active in a second computer system, communicating with one another over a communications medium, thus providing distributed functionality and allowing multiple clients to take advantage of the information-gathering capabilities ofthe server. Any software objects may be distributed across multiple computing devices or objects.

Client(s) and **server(s)** communicate with one another utilizing the functionality provided by protocol layer(s). For example, **HyperText** Transfer Protocol (HTTP) is a common protocol that is used in conjunction with the World Wide Web (WWW), or "the Web." Typically, a computer network address such as an Internet Protocol (IP) address or other reference such as a Universal Resource Locator (URL) can be used to identify the server or client computers to each other. The network address can be referred to as a URL address. Communication can be provided over a communications medium, e.g., client(s) and **server(s)** may be coupled to one another via TCP/IP **connection(s)** for high-capacity communication.

As the foregoing illustrates, the invention is directed to systems and methods for providing system level notifications in a multimedia console. It is understood that changes may be made to the illustrative embodiments described above without departing from the broad inventive concepts disclosed herein. For example, while an illustrative embodiment has been described above as applied to a multimedia console, running video games, for example, it is understood that the invention may be embodied in other computing environments. Furthermore, while illustrative embodiments have been described with respect to 4 users on the same console, embodiments having other numbers ofusers are also applicable. Accordingly, it is understood that the invention is not limited to the particular embodiments disclosed, but is intended to cover all modifications that are within the spirit and scope of the invention as defined by the appended claims.

## Claims

1. A method for providing system level notifications in a multimedia console having a central processing unit, a graphics processing unit, and a memory comprising the acts of:
managing the receipt of a notification for a user ofthe multimedia console with a process running as part ofthe multimedia console operating system while a separate multimedia application is running on the multimedia console; and
managing the display of a notification for a user ofthe multimedia console with a process running as part ofthe multimedia console operating system while the separate multimedia application is running on the multimedia console.

2. The method of claim 1 further comprising:
managing the receipt ofnotifications for simultaneous multiple users ofthe multimedia console with the process running as part ofthe multimedia console operating system while the multimedia application is running on the multimedia console; and
managing the display ofnotifications for simultaneous multiple users ofthe multimedia console with the process running as part ofthe multimedia console operating system while the multimedia application is running on the multimedia console.

3. The method of claim 2 further comprising:
providing a mechanism for a developer of a separate application for the multimedia console to specify in the development ofthe application a delay ofthe display ofthe notifications at certain points while the separate application is running on the multimedia console.

4. The method of claim 2 further comprising:
notifying a particular user within a plurality of simultaneous users ofthe multimedia console when a notification is received for the particular user by displaying a visual indication that differentiates the notification as intended for the particular user within the plurality of simultaneous users.

5. The method of claim 4 wherein the visual indication is associated with a multimedia console controller associated with the particular user.

6. The method of claim 5 further comprising:
providing a mechanism for the particular user to respond to the notification received for the particular user through an input mechanism on the controller; and
providing a mechanism for, upon the user responding to the notification, the multimedia console operating system navigating the particular user to a location within a user interface ofthe multimedia console displaying information regarding the notification for the particular user.

7. The method of claim 6 wherein the act ofproviding the responding mechanism comprises providing a system wherein the user pushes one time a single button on the controller that is associated with the particular user in order to respond to the notification.

8. A computer readable medium comprising computer executable instructions for performing the method of claim 1.

9. A method for providing system level notifications in a computing system comprising the acts of:
managing the receipt ofnotifications for simultaneous multiple users ofthe computing system with a process running as part ofthe computing system operating system while the a multimedia application is running on the computing system; and
managing the display of notifications for simultaneous multiple users ofthe computing system with the process running as part ofthe computing system operating system while the multimedia application is running on the computing system.

10. The method of claim 9 further comprising:
providing a mechanism for a developer of separate application for the computing system to specify in the development ofthe application a delay ofthe display of the notifications at certain points while the separate application is running on the computing system.

11. The method of claim 9 further comprising:
notifying a particular user within a plurality of simultaneous users ofthe computing system when a notification is received for the particular user by displaying a visual indication that differentiates the notification as intended for the particular user within the plurality of simultaneous users.

12. The method of claim 11 wherein the visual indication is associated with a computing system controller associated with the particular user.

13. The method of claim 12 further comprising:
providing a mechanism for the particular user to respond to the notification received for the particular user through an input mechanism on the controller; and
providing a mechanism for, upon the user responding to the notification, the computing system operating system navigating the particular user to a location within a user interface ofthe computing system displaying information regarding the notification for the particular user.

14. The method of claim 13 wherein the act ofproviding the responding mechanism comprises providing a system wherein the user pushes one time a single button on the controller that is associated with the particular user in order to respond to the notification.

15. A computer readable medium comprising computer executable instructions for performing the method of claim 9.

16. A system for providing system level notifications in a multimedia console having a central processing unit, a graphics processing unit, and a memory comprising:
means for managing the receipt of a notification for a user ofthe multimedia console with a process running as part ofthe multimedia console operating system while a separate multimedia application is running on the multimedia console; and
means, for managing the display of notification for a user of the multimedia console with a process running as part of the multimedia console operating system while the separate multimedia application is running on the multimedia console, said notification display managing means in operable communication with the notification receipt managing means.

17. The system of claim 16 wherein:
the notification receipt managing means further comprises:
means for managing the receipt ofnotifications for simultaneous multiple users ofthe multimedia console with a process running as part ofthe multimedia console operating system while the separate multimedia application is running on the multimedia console; and
the notification display managing means further comprises:
means for managing the display of notifications for simultaneous multiple users of the multimedia console with a process running as part ofthe multimedia console operating system while the separate multimedia application is running on the multimedia console.

18. The system of claim 17 further comprising:
means for notifying a particular user within a plurality of simultaneous users ofthe multimedia console when a notification is received for the particular user by displaying a visual indication that differentiates the notification as intended for the particular user within the plurality of simultaneous users.

19. The system of claim 18 wherein the visual indication is associated with a multimedia console controller associated with the particular user.

20. The method of claim 19 further comprising:
means for the particular user to respond to the notification received for the particular user through an input mechanism on the controller; and
means for, upon the user responding to the notification, the multimedia console operating system to navigate the particular user to a location within a user interface ofthe multimedia console displaying information regarding the notification for the particular user.
